# EUROPEAN PATENT SPECIFICATION

(11) **EP 2 154 039 B1**
(45) Date of publication and mention of the grant of the patent: **09.01.2013**
(21) Application number: 09173639.7
(22) Date of filing: 25.11.2004
(51) Int. Cl.: B60T 13/14, F16D 25/12

(54) **Twin Master Cylinder Assembly**
Doppelhauptzylindereinheit
Assemblage de maître cylindre double

(30) Priority: 25.11.2003 GB 0327402
(43) Date of publication of application: 17.02.2010
(62) Divisional of application: 04798650.0
(73) Proprietor: Carlisle Brake Products (UK) Limited, Pontypool NP4 0JJ (GB)
(72) Inventor: Batchelor, Mark, Newport, Gwent NP20 3NJ (GB); Williamson, Michael, Newport, Gwent NP18 3SY (GB); Parry, David Bruce, Kenilworth, Warwickshire CV8 2AW (GB)
(74) Representative: Jones, John Bryn

(56) References cited:
- EP-A- 0 340 911
- EP-A- 0 517 363
- EP-A2- 1 114 761
- GB-A- 2 061 433
- US-A- 5 249 423

## Description

The present invention relates to twin master cylinder assemblies, in particular for use with agricultural vehicles.

Agricultural vehicles, such as tractors, are known to include a pair of braked rear wheels and one or more front wheels. Such tractors further include a right hand brake pedal and a left hand brake pedal. The brake pedals can be coupled together to act in unison such that when the brakes are applied, both rear wheels are braked simultaneously and evenly.

By uncoupling the brake pedals, the right hand brake pedal can be applied alone causing just the right hand brake to be applied, and similarly the left hand brake pedal can be applied alone, causing just the left hand rear wheel to be applied. Applying say just the rear right hand brake, whilst simultaneously steering the front wheels fully to the right, enables the tractor to turn more sharply than by using steering alone. This can be particularly useful when turning a tractor with a tractor mounted implement, such as a plough, at a headland (i.e. the unploughed land at ends of furrows or near a fence) of a field.

Other tractors are known which include a pair of rear wheels and a pair of front wheels with each wheel having an associated brake. The braking system allows all four wheels to be simultaneously braked. Such a braking system is particularly helpful when the tractor is being used on the road, e.g. when hauling farm produce from a field to the farm buildings.

An object of the present invention is to provide a braking system that allows for braking of both rear wheels and one or more front wheels when the vehicle is being used on the road and to allow full braking of just one rear right hand wheel or one rear left hand wheel, for example when ploughing, at the option of the operator.

A further object of the present invention is to provide a dual circuit braking system such that if one circuit fails, the brakes connected to the other circuit will continue to function, thereby providing emergency braking.

The invention will now be described, by way of example only, with reference to the accompanying drawings, in which:-
Figure 1 is a cross-section view of a left hand master cylinder arrangement of a twin master cylinder assembly according to the present invention, taken on the section line XX of figure 3,
Figure 1A is an enlarged view of part of figure 1 further including a schematic drawing of brake pedals,
Figure 1B is an enlarged view of part of figure 1,
Figure 2 is a bottom view of the twin master cylinder assembly of figure 1 taken in the direction of arrow Z of figure 1,
Figure 3 is an end view of the twin master cylinder assembly of figure 1 taken in the direction of arrow W of figure 1 further including cut away views taken at the three sections labelled Y of figure 1, and
Figure 4 is a schematic isometric view of the twin master cylinder assembly as shown in figure 1 and includes further associated components (drawn schematically).

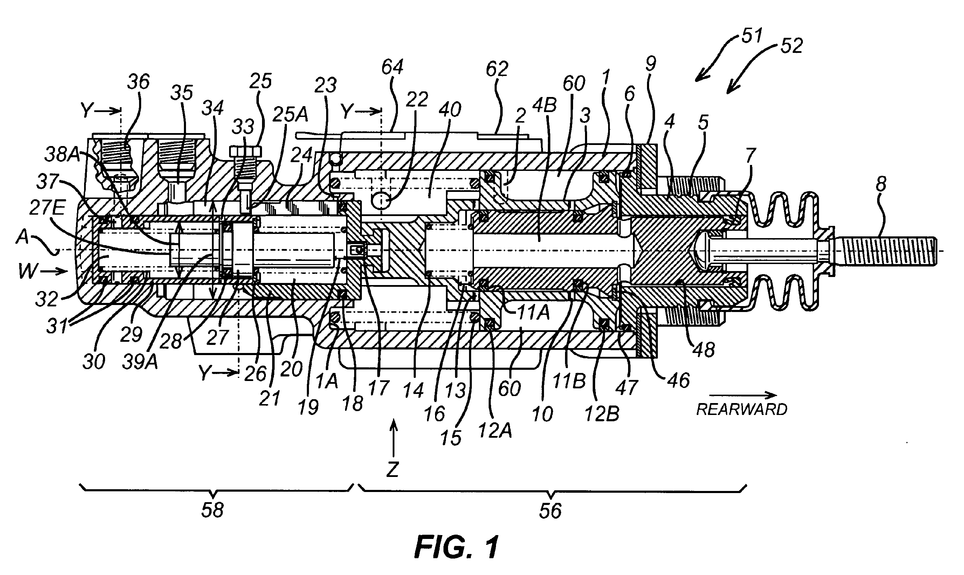

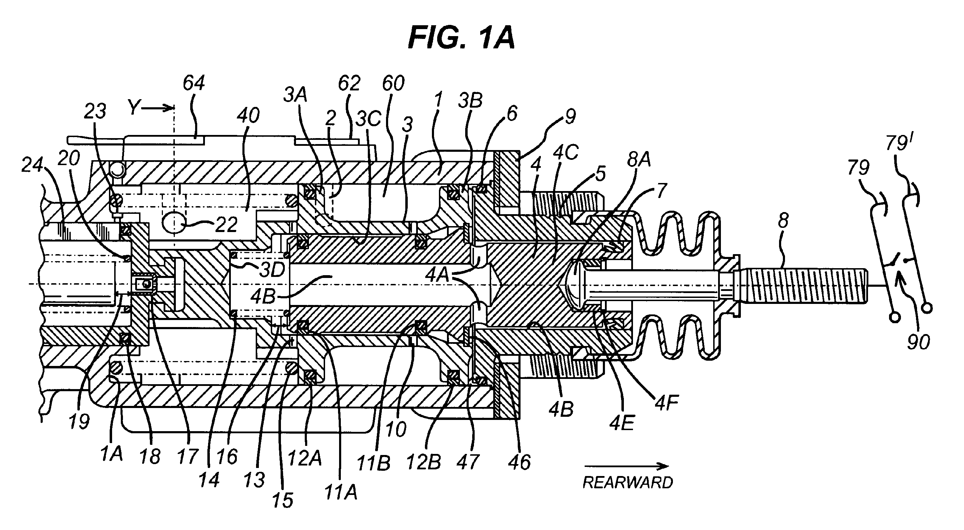

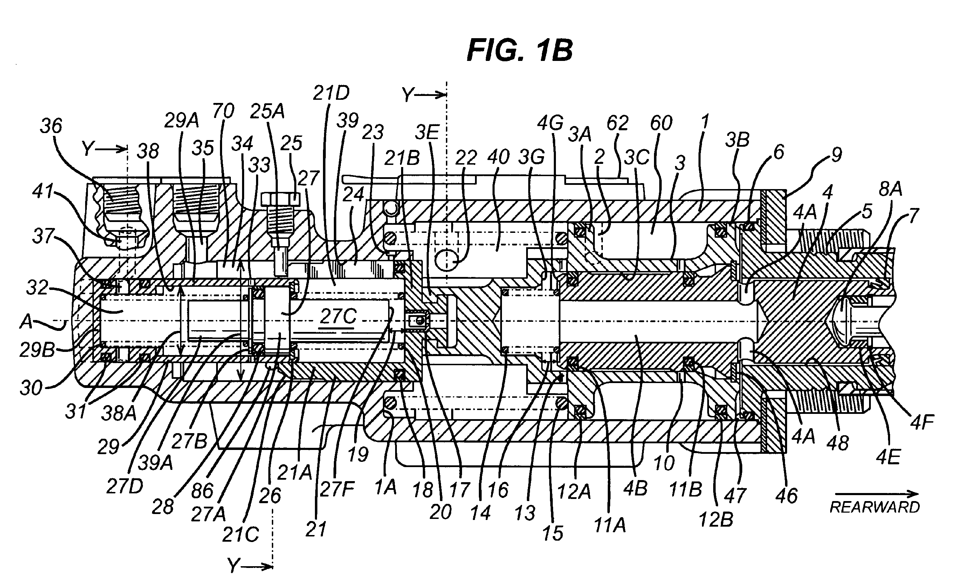

With reference to figures 1 to 4 there is shown a twin master cylinder assembly 51 which includes a left hand master cylinder arrangement 52 and a right hand master cylinder arrangement 54. The components of left hand master cylinder arrangement 52 are substantially identical to the components of right hand master cylinder arrangement 54, and as such, only left hand master cylinder arrangement 52 will be described in detail.

With reference to figure 1 there is shown a cross sectional view of left hand master cylinder arrangement 52. Left hand master cylinder arrangement 52 includes a left hand booster, generally indicated at 56, and a left hand tandem master cylinder generally indicated at 58.

The purpose of the booster 56 is to increase the pedal effort applied by push rod 8 and apply the increased load to the primary chamber piston 21 of the tandem master cylinder 58. Operation of the booster 56 is as follows:-

The twin master cylinder assembly 51 includes a body 1, which is formed as a unitary component. In this case the body is formed as a machined casting but in further embodiments need not be the case. For example the body could be machined from solid. Body 1 includes a booster bore 47 within which is slideably mounted booster piston 3.

Booster piston 3 includes two piston lands 3A and 3B in spaced apart relationship. Land 3A includes seal 12A and land 3B includes seal 12B. Between seals 12A and 12B is a series of a radially orientated holes 10. An annular pressure chamber 60 is defined between seals 12A and 12B.

Slideably mounted within a bore 3C of booster piston 3 is a plunger 4 which includes seals 11A and 11B in spaced apart relationship. Plunger 4 includes radially orientated holes 4A and central bore 4B. Plunger 4 includes a cylindrical projection 4C which includes a seal 7. An enlarged end 8A of push rod 8 sits in a recess 4D and is retained therein by collar 4E and circlip 4F. Plunger 4 is biased to the right when viewing figure 1 by spring 14 which acts on abutment 3D of booster piston 3. Circlip 46 limits movement to the right of plunger 4 relative to booster piston 3.

Spigot 5 includes a seal 6 which is received in booster bore 47. Spigot 5 is held in place by plate 9 and includes a spigot bore 48 which slideably receives cylindrical projection 4C.

Booster piston 3 includes a series of radially orientated holes 13 which connect booster bore 3C to tank chamber 40.

Spring 15 acts to bias the booster piston to the right when viewing figure 1 and reacts against an annular region 1A of body 1.

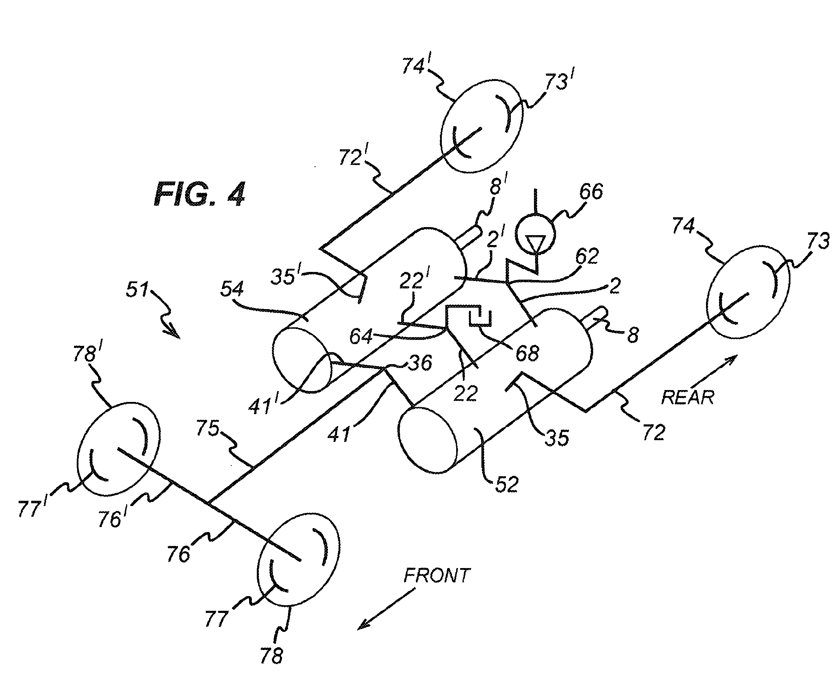

A hole 2 connects annular pressure chamber 60 to pressure port 62. Pressure port 62 is disposed between the left and right hand master cylinder assemblies (as best seen in figure 4) and is also connected by hole 2' to annular pressure chamber 60' (not shown) of the right hand master cylinder assembly. Holes 2 and 2' are both formed by drilling. The upper ends of the holes are at a lower region of pressure port 62 which is formed in body 1 and is the sole pressure port of the body. Advantageously, this means that only a single connection is required to the body to connect holes 2 and 2' to the pump 66.

Tank chamber 40 is connected to tank port 64 by hole 22. Tank port 64 is positioned between the left and right hand master cylinder assemblies (as best seen in figure 4), and is also connected to tank chamber 40' (not shown) of the right hand master cylinder assembly by a hole 22'. Holes 22 and 22' are both drilled holes, the upper ends of which terminate at the base of the tank port 64 which is formed in the body 1 and is the only tank port of the body. Advantageously, this means that only a single connection is required to the body to connect holes 22 and 22' to the tank.

Figure 1 schematically illustrates left hand brake pedal 79 and right hand brake pedal 79'. Furthermore, there is schematically illustrated a linking system 90 (as known in the prior art) which can selectively couple the brake pedals together, or alternatively can decouple the pedals, thereby allowing independent movement of one pedal relative to the other to selectively apply the right hand rear brake or the left hand rear brake as will be further described below.

Operation of the left hand booster 56 is as follows:-

Engine driven hydraulic pump 66 supplies pressurised hydraulic fluid to annular pressure chamber 60 via pressure port 62 and hole 2.

Figure 1 shows the position of the various components when in a passive state, i.e. when the brakes have not been applied. The pressurised hydraulic fluid in annular pressure chamber 60 is trapped by seals 12A, 12B, 11A and 11B. It should be noted, that whilst holes 10A allow fluid communication between annular pressure chamber 60 and booster piston bore 3C, seals 11A and 11B prevent escape of this fluid past the seals.

Operation of the left hand brake pedal 79 either alone, or in conjunction with the right hand brake pedal 79' causes push rod 8 to move to the left when viewing figure 1, thereby moving the plunger 4 to the left relative to the booster piston 3 (thus compressing spring 14). The rearward seal 11B passes over and opens holes 10 in booster piston 3 and allows the pressurised fluid to enter the central bore 4B of plunger 4 via holes 4A. Simultaneously the forward seal 11A passes over and closes hole 13, thereby preventing the hydraulic fluid escaping to the tank chamber 40. The hydraulic pressure acts on the booster piston, urging it forwards (to the left when viewing figure 1) and this force acts to supplement the pedal load applied to push rod 8.

For a particular load applied to the push rod 8, an equilibrium position will be achieved, whereby seals 11A and 11B will seal holes 13 and 10 respectively, and the load applied to the primary chamber piston 21 will be equal to the load applied to push rod 8 multiplied by the boost ratio. If the load applied to the push rod 8 is increased, seal 11B will again open hole 10 to allow further pressurised fluid to enter central bore 4B, thereby increasing the force applied to primary chamber piston 21. When the load applied to push rod 8 is decreased, then the plunger 4 will move to the right slightly, thereby allowing seal 11A to open holes 13 and allow escape of some of the pressurised hydraulic fluid into the tank chamber 40. It should be noted that tank chamber 40 is vented to tank 68 via hole 22 and tank port 64. If the brakes are fully released, then the components return to the position as shown in figure 1. It would be appreciated that in this position holes 13 are open, thereby venting central bore 4B to tank.

A description of the various components of the left hand tandem master cylinder 58 is as follows:-

The forward end of body 1 includes a bore 39 having diameter 39A. A rear left hand brake port 35 is positioned towards the front of bore 39. An alignment pin 25 has a lower end 25A which projects into bore 39. Towards the rear of bore 39 is a self bleed hole 23 which connects bore 39 to tank chamber 40.

Slideably mounted within bore 39 is a primary chamber piston 21, which includes a generally cylindrical piston wall 21A and an end face 21B. Piston wall 21A includes a chamfer 21C at a forward end, a longitudinal slot 24 and a seal 18. End face 21B includes a one way recuperation valve 17 which allows fluid to pass from tank chamber 40 to a region 21D within the primary chamber piston, but prevents flow of fluid from region 21D to tank chamber 40.

A region 70 is defined between bore 39 and tube 29 and is in fluid communication with region 21D via slot 24. Region 70, 21D and slot 24 together define a primary chamber 34. Primary chamber piston 21 is slideable mounted within bore 39, and alignment pin 25 engages slot 24 to maintain the correct rotational alignment of primary chamber piston 21 in bore 39.

Tube 29 includes a generally cylindrical wall 29A having a bore 38 of diameter 38A. Tube 29 further includes an end face 29B. Wall 29A includes a series of radially orientated holes 37 which are in permanent fluid connection with front common brake port 36 via hole 41. A seal 31 is provided on either side of hole 37 to seal the cylindrical wall 29A to the body 1.

The cylindrical wall 29A includes a series of radially orientated self bleed holes 33 which hydraulically connect bore 38 with the primary chamber 34.

Slideably mounted within bore 38 is secondary piston 27 which includes piston land 27A, piston land 27B, elongate boss 27C and elongate boss 27D.

A seal 28 is mounted between lands 27A and 27B and acts to seal the secondary piston 27 to the bore 38 of the tube 29.

Secondary piston 27, cylindrical wall 29A and end face 29B together define a secondary chamber 32. A spring 30 is mounted on elongate boss 27D with a rearward end abutting land 27B and a forward end abutting end face 29B. Spring 30 acts to bias the secondary piston 27 to the right when viewing figure 1, and a circlip 26 mounted in a groove of cylindrical wall 29A limits movement of the second piston 27 to the right relative to tube 29.

A spring 20 is mounted on elongate boss 27C with a forward end abutting land 27A and a rearward end abutting end face 21B of the primary chamber piston 21.

Spring 20 is a relatively high rate spring when compared with spring 30. Furthermore, as shown in figure 1, spring 20 is under virtually zero preload.

Operation of the left hand tandem master cylinder 58 is as follows:-

As mentioned above, when the left hand brake pedal 79 is applied in conjunction with the right hand brake pedal 79', push rod 8 moves plunger 4 to the left when viewing figure 1, which in turn causes the booster system to move booster piston 3 to the left. End 3E of booster piston 3 acts directly on primary chamber piston 21 causing it to move to the left. An initial movement of primary chamber piston 21 to the left will cause seal 18 to pass over self bleed hole 23, thereby trapping a fixed volume of hydraulic fluid in the primary chamber 34 and second chamber 32. Because spring 20 has a higher rate than spring 30, as the primary chamber piston 21 moves to the left, spring 20 will move the secondary piston 27 to the left thereby compressing spring 30 and causing seal 28 to pass over holes 33. The action of seal 28 passing over holes 33 traps a specific volume of hydraulic fluid in secondary chamber 32.

It will therefore be appreciated that once seal 18 has passed self bleed hole 23 and once seal 28 has passed holes 33 (following an initial application of the brakes), then there is a fixed volume of hydraulic fluid in the primary chamber 34, and is also fixed volume in the secondary chamber 32. Continued movement of the primary chamber piston to the left (i.e. continued application of the brakes) will pressurise the primary chamber 34, and cause the rear left brake to be applied.

It will be appreciated that the forces on the secondary piston causing it to move to the left are as a result of the hydraulic fluid pressure in the primary chamber, and also as a result of partially compressing spring 20. Piston 27 will therefore move to the left until such time as the forces are balanced by the pressure in the second chamber 32 and the force applied by spring 30. Thus it can be seen that moving the primary chamber piston 21 to the left, causes pressurisation of the primary chamber and also pressurisation of the second chamber. Pressurisation of the secondary camber will cause the front brakes to be applied, as will be described further below.

As mentioned above, the right hand master cylinder arrangement 54 is substantially identical to the left hand master cylinder arrangement 52 and includes identical components. For ease of reference, similar components/features of the right hand master cylinder arrangement 54 have been labelled identically with their equivalent components/feature of the left hand master cylinder arrangement, except with the addition of an apostrophe (').

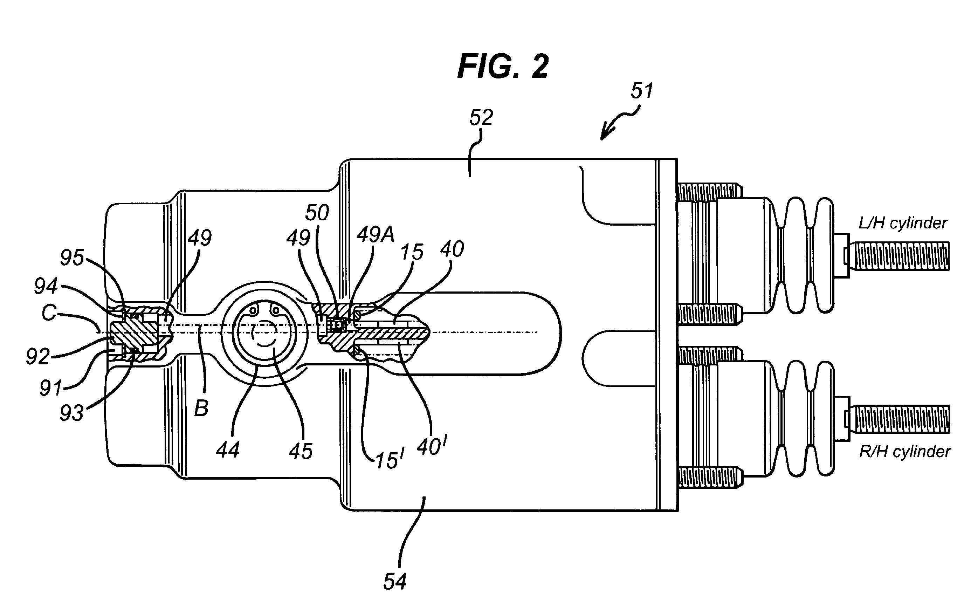

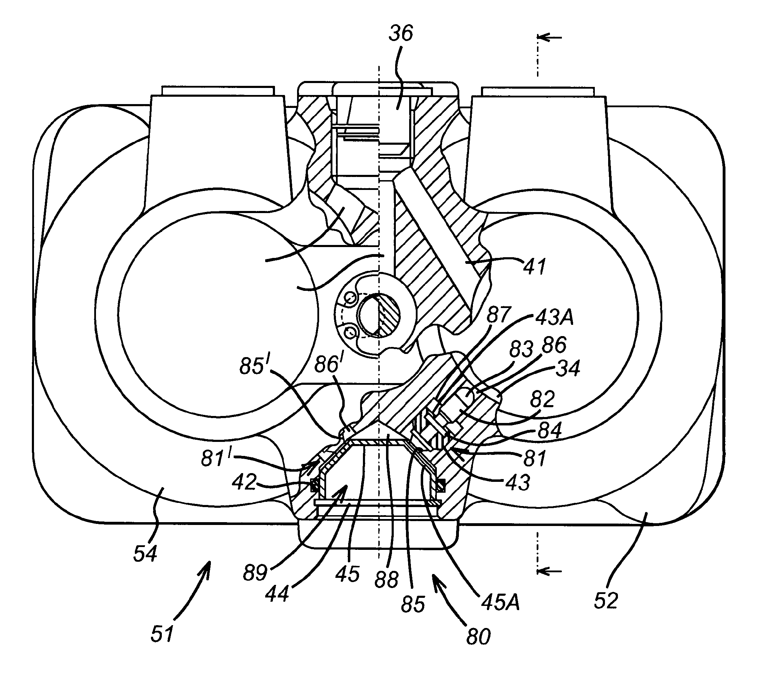

With reference to figures 2, 3 and 4, the twin master cylinder assembly 51 has a left hand master cylinder arrangement 52 mounted alongside a right hand master cylinder arrangement 54. Rear left hand brake port 35 is connected via hydraulic line 72 to the rear left brake 73 of rear left wheel 74. In a similar manner rear right hand brake port 35' is connected via hydraulic line 72' to rear right brake 73' of rear right wheel 74'. Holes 41 and 41' connect the secondary chambers 32 and 32' respectively to common brake port 36. Hydraulic lines 75, 76 and 76' connect common brake port 36 with the front left brake 77 of front left wheel 78 and the front right brake 77' of the front right wheel 78'. It will be appreciated that left hand secondary chamber and the right hand secondary chamber are both in fluid communication with the common brake port 36 and this common brake port is formed in the single unitary body. Furthermore, the common brake port 36 is the only brake port on the body that serves the front brakes. Thus, advantageously only a single connection need be made to the body to supply both front brakes which is clearly advantageous.

With reference to figure 3 there is shown a valve arrangement 80 (also known as a balance valve assembly) which serves to connect the left hand primary chamber 34 with the right hand primary chamber 34' when the right and left brake pedals are coupled together, and therefore applied simultaneously. The valve also acts to isolate primary chamber 34 from primary chamber 34' when the brake pedals have been decoupled and only the right hand brake pedal is applied, or only the left hand brake pedal is applied. Valve assembly 80 includes a left hand valve 81 and a right hand valve 81', both of which are identical. Valve 81 includes a valve pin 82 having a domed end 83, and lands 84 and 85 upon which is mounted an elastomeric cylindrical seal 43 having a sealing face 43A. The valve pin is mounted in a stepped bore 86 having a sealing face at the step 87 against which seal 43 engages.

Stepped bores 86 and 86' are both formed by drilling the single unitary body. In this case the bores are drilled at an angle of 90 degrees relative to each other, though in further embodiments this need not be the case. Advantageously, the valve assembly 80 only requires a single retainer 45 (see below).

The body 1 includes a recess 88 having an opening 89 which is blocked by a retainer 45 which is held in place by a circlip 44. An elastomeric seal 42 surrounds the retainer 45 to prevent oil leakage. The retainer 45 has a frustoconical region 45A which acts as an abutment against land 85 to ensure that valve pin 82 is retained in stepped bore 86.

As shown in figure 3, land 85 is abutting frustoconical region 45A and sealing face 43A is not in contact with the sealing face of the step 87. Thus, as shown in figure 3, valve 81 is open, allowing fluid communication between primary chamber 34 and region 88 (since valve pin 82 and elastromeric seal 43 are a loose fit in their respective regions of the stepped bore 86).

It can also be seen from figure 3 that land 85' is in contact with frustoconical region 45A and thus valve 81' is also open. Thus, as shown in figure 3, the left hand primary chamber 34 is hydraulically connected to the right hand primary chamber 34' via valve assembly 80.

As best shown in figure 1B, stepped bore 86 is positioned just in front of chamfer 21C when the primary chamber piston 21 is in the rest position. When the brake pedals 79 and 79' are linked via linking system 90, and the brakes are applied, the left hand primary chamber piston 21 and the right hand primary chamber piston 21' are both moved forwards simultaneously, and the chamfer 21C in conjunction with domed end 83 ensures that valve 81 is caused to open. Similarly the chamfer 21C' of the right hand primary chamber piston 21', in conjunction with domed end 83' causes the right hand valve 81' to open. Since valves 81 and 81' are both open, then valve assembly 80 as a whole is open, allowing fluid communication between the left hand primary chamber 34 and the right hand primary chamber 34'. This hydraulic communication ensures that both primary chambers are maintained at the same pressure during braking and hence the rear brakes 73 and 73' are applied to the same extent, ensuring that there is no tendency of the vehicle to veer either to the right or to the left during braking.

However, when the brake pedals are not linked, and only one of the brake pedals is applied, for example, the left hand brake pedal 79, then only the left hand primary chamber piston 21 is advanced and only the left hand valve 81 is forced open. The right hand primary chamber piston 21' will remain in its rest position. As the left hand primary chamber piston advances, the left hand primary chamber 34 will become pressurised, which in turn will pressurise recess 88 via the left hand step bore 86. Pressurisation of recess 88 will cause the right hand valve 81 to shut thereby preventing the escape of pressurised hydraulic fluid from the left hand primary chamber 34, and therefore allowing the left hand rear brake 73 to be applied.

Similarly, operating just the right hand brake pedal will cause the right hand valve 81' to open, but close the left hand valve 81, thereby allowing just the rear right brake 73' to be applied.

As mentioned above, when both brake pedals are linked via the linkage system 90, the valve assembly 80 is opened, thereby allowing the pressure in the left primary chamber 34 to equalise with the right primary chamber 34'. With regard to the secondary chambers 32 and 32', these chambers are permanently connected to each other via holes 41 and 41' which meet at the front common brake port 36. Thus, these secondary chambers 32 and 32' are always pressure balanced.

In this case, holes 41 and 41' are drilled holes and they are angled relative to each other at 64 degrees. As is best seen in figure 3, the uppermost portion of hole 41 terminates at the base of the front common brake port. By arranging holes in this manner, it is possible to drill both holes and still have them in fluid communication with the single front common brake port 36.

When the brake pedals are not linked, and, say the left brake pedal 79 is applied, then, as mentioned above, the left rear brake 73 will be applied, but the right rear brake 73' will not be applied. Under these circumstances, neither of the front brakes 77 or 77' will be applied for reasons as explained below.

If only the left brake is applied, then the left primary chamber piston 21 will advance, whereas the right hand primary chamber piston 21' will remain in its rest position. As the left primary chamber piston 21 advances, then seal 18 will pass over self bleed hole 23 and seal 28 will pass over holes 33.

However, because the right hand primary chamber piston 21' remains stationary, right hand self bleed hole 23' will also remain open and right hand primary chamber 34 will remain in fluid connection with tank 68. Because valve assembly 80 will remain closed, there will be no fluid transfer from left hand primary chamber 34 to right hand primary chamber 34' via valve assembly 80. Hence, right hand primary chamber cannot be pressurised by this route and hence there will be no tendency of right hand secondary piston 27' to advance. Thus, right hand self bleed hole 33' will also remain open. As left hand secondary piston 27 advances, hydraulic fluid will be forced from left hand secondary chamber 32 through left hand hole 41, through right hand hole 41', through right hand secondary chamber 32', through (open) right hand holes 33', through right hand primary chamber 34' through (open) right hand self bleed hole 23' to right hand tank chamber 40', and ultimately to tank 68. Thus, since both secondary chambers 32 and 32' are connected to tank, neither can be pressurised, and hence, neither of the front brake 70 or 77' will be applied.

When the brake pedals are unlatched, and say the left brake pedal is applied hard, thereby applying the rear left brake, significant pressure will be developed in the primary chamber 34. This pressure may be sufficient to overcome the spring force applied by spring 30. Under such circumstances the secondary piston 27 will move to the left when viewing figure 1 until such time as end 27E of secondary piston 27 abuts end face 29B of tube 29. Thus, secondary piston 27 is caused to fully stroke, and the volume of hydraulic fluid required to fully stroke piston 27 is provided by primary piston 21. Thus, the ratio of diameters 39A and 38A is designed to provide enough volume to fully stroke piston 27 and still apply the respective rear brake as normal. By way of example, it may require 10 millimetres stroke of primary piston 21 to fully stroke secondary piston 27. Under such circumstances, primary piston 21 may be designed with a total stroke of 30 millimetres. This therefore provides 20 millimetres of reserve stroke of the primary piston 21 to actuate the rear left brake.

It will therefore be appreciated that the system allows all four brakes to be applied simultaneously, or the rear left brake to be applied in isolation or the rear right brake to be applied in isolation, at the option of the operator.

When the brakes are released, there is a risk that the pressure in the primary chambers or secondary chambers momentarily falls below atmospheric pressure. If this was to happen, there is a risk, that air can be sucked into the system. To obviate this risk, the twin master cylinder assembly 51 includes various one way valves as follows:-

As previously mentioned, valve 17 allows hydraulic fluid to flow from the left hand tank chamber 40 to the left hand primary chamber 34 as the primary chamber piston 21 returns to the position as shown in figure 1. A corresponding right hand valve 17' allows hydraulic fluid to flow from the right hand tank chamber 40' to the right hand primary chamber 34' as the right hand primary chamber piston 21' returns to its rest position. Thus, valves 17 and 17' ensure that the pressure in their corresponding primary chambers does not fall below atmospheric pressure.

A single valve 50 allows hydraulic fluid to flow from the left hand tank chamber 40 to serve both the left had secondary chamber 32 and the right hand secondary chamber 32'. This valve ensures that the pressure in either of the secondary chambers 32 or 32' does not fall below atmospheric pressure as follows:-

Body 1 includes a horizontal hole 49 (also known as a one way valve passage way) drilled in the body 1 and positioned at the horizontal centre line A of the valve body and positioned approximately mid way between the left and right hand master cylinder assemblies. As best seen in figure 2, the centre line B of hole 49 is offset slightly to the left of the vertical centre line C of the valve body 1. This offset means that the stepped down end 49A of hole 49 breaks into the left hand tank chamber 40.

At the front end of body 1 there is a cylindrical recess 91 the axis of which is coincident with horizontal centre line A and vertical centre line C. Recess 91 is sealed by a plug 92 having an elastomeric seal 93, with the plug being held in place by a circlip 94 which is mounted in a groove 95 of the recess 91. A vertical hole 96 connects common front brake port 36 with recess 91. Recess 91 is in turn connected with hole 49.

The applicant is the first to realise that when a pair of secondary chambers are provided to serve front brakes, then only a single one way valve is required to ensure that air does not enter the circuit associated with the secondary chambers when the brakes are released.

Note that whether or not valves 17, 17' and 50 open depend on several factors including the speed at which the brakes are released. If the brakes are released slowly, then none of valves 17, 17' or 50 will open. However, once the brakes have been fully released, and the twin master cylinder assembly is in its rest position, as shown in figure 1, then self bleed holes 34, 34', 23 and 23' will always be open. Clearly with use, the brake linings will wear. When the brakes are provided with self adjusting mechanisms, to compensate for such wear, then the volume of hydraulic fluid required for each hydraulic circuit, e.g. the hydraulic circuit serving the rear brakes, or the hydraulic circuit serving the front brakes, will increase. This increase in volume can be accommodated by the self bleed holes, since whenever the system returns to its rest position, the self bleed holes are opened and connected to tank. Similarly, expansion and contraction of the hydraulic fluid can be accommodated by the self bleed holes.

The present system provides for emergency braking under certain failure modes.

Thus, with both brake pedals linked, if, when the brakes are applied, hydraulic line 72 fails, hydraulic fluid in the primary chamber 34 will escape, and the pressure of the primary chamber will fall to zero. Because both primary chamber pistons 21 and 21' have been advanced, then valve assembly 80 will be open, and the pressure in the light hand primary chamber 32' will also fall to zero. Under these circumstances, neither of the rear brakes will be applied.

However, primary piston 21 will continue to advance until such time as end face 21B of the primary piston 21 contacts end 27F of secondary piston 27 (thereby closing distance 19). This contact will ensure that the secondary piston 27 advances, thereby applying the front brakes. The corresponding distance 19' will also close between the right hand primary chamber 21 and the light hand secondary piston 27, and therefore both the secondary pistons 27 and 27' will advance in unison to apply the front brakes.

Where the brake pads are linked and the brakes are applied and hydraulic line 75 fails, hydraulic fluid in both secondary chambers 32 and 32' will escape and the pressure in both secondary chambers will decay to zero, and it will not be possible to apply the front brakes. However, both rear brakes will continue to function. In particular, with sufficient pedal force, the pressure in the primary chambers 34 and 34' will be sufficient to overcome the corresponding springs 30 and 30', thereby fully stroking the secondary pistons 27 and 27'. However, under these circumstances (taking the example mentioned above) there will still be 20 millimetres of reserve travel for each primary chamber piston to enable both rear brakes to applied.

As mentioned above, during an initial application of both brakes seals 18 and 18' pass their respective bleed holes 23 and 23'. Similarly seals 28 and 28' pass their respective self bleed holes 33 and 33'. Once this has occurred, it will be apparent that the primary chambers become hydraulically isolated from the secondary chambers thereby providing a split braking circuit during continued actuation of the brakes. This split braking circuit continues to be independent of each other even if a hydraulic line of the rear circuit (e.g. hydraulic line 72) or a hydraulic line of the front circuit (e.g. hydraulic line 75) fails.

In the event that the booster side of the system fails, e.g. in the event that pressurised fluid cannot be supplied to pressure port 62, then brake pedal application will advance the plungers 4 and 4' such that end surfaces 4G and 4G' of the plungers engage surfaces 3G and 3G' of the booster pistons (i.e. distances 16 and 16' close) thereby causing all four brakes to be applied albeit without boost assistance.

As is shown on figure 3, hole 41 is drilled at an angle of 64 degrees relative to hole 41'. Hole 22 is drilled at an angle of 45 degrees relative to hole 22'. Stepped bore 86 is drilled at an angle of 90 degrees relative to stepped bore 86'. The angle between the holes 2 and 2' is not shown, but might typically be 90 degrees or less.

By angling the various pairs of holes in this manner, enables the provision of a single port or single retainer. Thus, the angle between holes 2 and 2', 22 and 22', 41 and 41', and 86 and 86' are preferably less than 180 degrees, more preferably 90 degrees or less, more preferably less than 90 degrees (i.e. an acute angle).

For the avoidance of doubt, the term "left" and "right" is merely being used to distinguish similar components, and should not be regarded as defining a particular spatial relationship of one component relative to another.

## Claims

1. A twin master cylinder assembly (51) having a left hand tandem master cylinder (58) having a left hand primary chamber (34) contained within a body and a left hand secondary chamber (32) contained within the body, and a right hand tandem master cylinder having a right hand primary chamber contained within the body and a right hand secondary chamber contained within the body, the left hand tandem master cylinder (58) being independently operable from the right hand tandem master cylinder in which at least a part of the left hand primary chamber surrounds a part of the left hand secondary chamber and/or at least a part of the right hand primary chamber surrounds a part of the right hand secondary chamber.

2. A twin master cylinder assembly (51) as defined in claim 1 in which the body is a single unitary body (1).

3. A twin master cylinder assembly (51) as defined in claim 1 or 2 in which the body (1) is a cast body.

4. A twin master cylinder assembly (51) as defined in any preceding claim in which the left hand secondary chamber (32) and the right hand secondary chamber are both in fluid communication with a single secondary chamber outlet port (36) formed in the body.

5. A twin master cylinder assembly (51) as defined in any preceding claim in which the left hand secondary chamber (32) is in permanent fluid communication with the right hand secondary chamber.

6. A twin master cylinder assembly (51) as defined in any preceding claim in which the left hand tandem master cylinder (58) has a left hand tank chamber region (40) and the right hand tandem master cylinder has a right hand tank chamber region in which the left and right hand tank chamber regions are in permanent fluid communication with a single tank reservoir port (64) formed in the body.

7. A twin master cylinder assembly (51) as defined in any preceding claim in which the left hand secondary chamber (32) and the right hand secondary chamber are both in permanent fluid communication with a single one way valve (50) which prevents fluid flow from the secondary chambers during brake actuation and allows fluid flow to the secondary chambers during brake release.

8. A twin master cylinder assembly (51) as defined in any preceding claim including a balance valve assembly (80) having a left hand one way balance valve (81) situated in a left hand balance valve passageway (86) that is in fluid communication with the left hand primary chamber and a right hand one way balance valve (81') situated in a right hand balance valve passageway (86') that is in fluid communication with the right hand primary chamber in which the left and right hand balance valve passageways are both formed in the body.

9. A twin master cylinder assembly (51) as defined in any preceding claim including a left hand booster (56) operable to apply a force to the left hand tandem master cylinder and a right hand booster operable to apply a force to the right hand tandem master cylinder in which the left and right hand boosters are all contained within said body (1).

10. A twin master cylinder assembly (51) as defined in claim 9 including a single inlet port (62) for supplying pressurised fluid to the left and right hand boosters, in which the single inlet port is formed in the body.

11. A twin master cylinder assembly (51) as defined in claim 10 in which the single inlet port (62) is in fluid communication with the left hand booster via a left hand inlet port passageway (2) and is in fluid communication with the right hand booster via a right hand inlet port passageway (2') in which the left and right hand inlet port passageways are formed by drilling.

12. A twin master cylinder assembly (51) as defined in any preceding claim in which each secondary chamber has a secondary chamber self bleed hole (33) that is open when the twin master cylinder assembly is in a rest position, actuation of one of said left or right hand tandem master cylinders alone causing hydraulic fluid in the secondary chamber of said one of said left or right hand tandem master cylinders to be vented via the secondary chamber self bleed hole of the other of said one of said left or right hand tandem master cylinder.

13. A twin master cylinder assembly (51) as defined in claim 12 in which each primary chamber has a primary chamber self bleed hole (23) each being preferably formed in the body, preferably by drilling, that is open when the twin master cylinder is in a rest position, actuation of one of said left or right hand twin master cylinders alone causing hydraulic fluid in the secondary chamber of said one of said left or right hand tandem master cylinders to be vented via the primary chamber self bleed hole of the other of said one of said left or right hand tandem master cylinder.

14. A twin master cylinder assembly (51) as defined in any preceding claim in which the left (34) and right hand primary chambers are at least partially defined by respective left (21) and right hand primary chamber pistons (21), and the left and right hand secondary chambers are at least partially defined by respective left (27) and right hand secondary chamber pistons, in which the left or right hand primary piston acts on the corresponding left or right hand secondary piston in the event of loss of fluid pressure in the left hand or right hand primary chamber.

15. A twin master cylinder assembly (51) as defined in claim 14 in which the stroke of the secondary piston (27) is limited by a stop and in the event of loss of pressure in the secondary chamber (32), the primary piston (21) travel includes reserve travel following the full stroking of the secondary piston.

## Patentansprüche

1. Doppelhauptzylinderanordnung (51), mit einem linken Tandem-Hauptzylinder (58), der eine in einem Körper aufgenommene linke Primärkammer (34) und eine in dem Körper aufgenommene linke Sekundärkammer (32) hat, und einem rechten Tandem-Hauptzylinder, der eine in dem Körper aufgenommene rechte Primärkammer und eine in dem Körper aufgenommene rechte Sekundärkammer hat, wobei der linke Tandem-Hauptzylinder (58) unabhängig von dem rechten Tandem-Hauptzylinder betreibbar ist, wobei wenigstens ein Teil der linken Primärkammer einen Teil der linken Sekundärkammer umgibt und/oder wenigstens ein Teil der rechten Primärkammer einen Teil der rechten Sekundärkammer umgibt.

2. Doppelhauptzylinderanordnung (51) nach Anspruch 1, wobei der Körper ein einzelner, einstückiger Körper (1) ist.

3. Doppelhauptzylinderanordnung (51) nach Anspruch 1 oder 2, wobei der Körper (1) ein Gusskörper ist.

4. Doppelhauptzylinderanordnung (51) nach einem vorhergehenden Anspruch, wobei die linke Sekundärkammer (32) und die rechte Sekundärkammer beide mit einem einzigen, im Körper ausgebildeten Auslassanschluss (36) für die Sekundärkammern in Fluidverbindung stehen.

5. Doppelhauptzylinderanordnung (51) nach einem vorhergehenden Anspruch, wobei die linke Sekundärkammer (32) in permanenter Fluidverbindung mit der rechten Sekundärkammer steht.

6. Doppelhauptzylinderanordnung (51) nach einem vorhergehenden Anspruch, wobei der linke Tandem-Hauptzylinder (58) einen linken Behälterkammerabschnitt (40) und der rechte Tandem-Hauptzylinder einen rechten Behälterkammerabschnitt hat, wobei der linke und der rechte Behälterkammerabschnitt in permanenter Fluidverbindung mit einem einzigen, im Körper ausgebildeten Behälteranschluss (64) zu dem Ausgleichsbehälter stehen.

7. Doppelhauptzylinderanordnung (51) nach einem vorhergehenden Anspruch, wobei die linke Sekundärkammer (32) und die rechte Sekundärkammer beide in permanenter Fluidverbindung mit einem einzigen Einwegventil (50) stehen, welches Fluidfluss aus den Sekundärkammern beim Betätigen der Bremse verhindert und Fluidfluss zu den Sekundärkammern beim Lösen der Bremse erlaubt.

8. Doppelhauptzylinderanordnung (51) nach einem vorhergehenden Anspruch, die eine Ausgleichsventilanordnung (80) mit einem linken Einwegausgleichsventil (81), das in einem linken Ausgleichsventildurchgang (86) liegt, der in Fluidverbindung mit der linken Primärkammer steht, und einem rechten Einwegausgleichsventil (81') aufweist, das in einem rechten Ausgleichsventildurchgang (86') liegt, der in Fluidverbindung mit der rechten Primärkammer steht, wobei der linke und der rechte Ausgleichsventildurchgang beide in dem Körper ausgebildet sind.

9. Doppelhauptzylinderanordnung (51) nach einem vorhergehenden Anspruch, die einen linken Verstärker (56), der so betreibbar ist, dass er eine Kraft auf den linken Tandem-Hauptzylinder aufbringt, und einen rechten Verstärker aufweist, der so betreibbar ist, dass er eine Kraft auf den rechten Tandem-Hauptzylinder aufbringt, wobei der linke und der rechte Verstärker alle in dem Körper (1) enthalten sind.

10. Doppelhauptzylinderanordnung (51) nach Anspruch 9, die einen einzigen Einlassanschluss (62) für die Versorgung des linken und des rechten Verstärkers mit unter Druck stehendem Fluid aufweist, bei der der einzige Einlassanschluss in dem Körper ausgebildet ist.

11. Doppelhauptzylinderanordnung (51) nach Anspruch 10, wobei der einzige Einlassanschluss (62) über einen linken Durchgang (2) des Einlassanschlusses mit dem linken Verstärker und über einen rechten Durchgang (2') des Einlassanschlusses mit dem rechten Verstärker in Fluidverbindung steht, wobei der linke und der rechte Durchgang des Einlassanschlusses durch Bohren gebildet sind.

12. Doppelhauptzylinderanordnung (51) nach einem vorhergehenden Anspruch, wobei jede Sekundärkammer ein Selbstentlüftungsloch (33) der Sekundärkammer hat, das offen ist, wenn die Doppelhauptzylinderanordnung in einer Ruhestellung ist, wobei die Betätigung entweder des linken oder des rechten Tandem-Hauptzylinders allein eine Entlüftung von Hydraulikfluid in der Sekundärkammer des linken oder des rechten Tandem-Hauptzylinders über das Sekundärkammerselbstentlüftungsloch des jeweils anderen, des rechten oder des linken, Tandem-Hauptzylinders bewirkt.

13. Doppelhauptzylinderanordnung (51) nach Anspruch 12, wobei jede Primärkammer ein, vorzugsweise jeweils in dem Körper vorzugsweise durch Bohren ausgebildetes, Selbstentlüftungsloch (23) der Primärkammer hat, das offen ist, wenn der Doppelhauptzylinder in einer Ruhestellung ist, wobei die Betätigung entweder des linken oder des rechten Doppel-Hauptzylinders allein eine Entlüftung von Hydraulikfluid in der Sekundärkammer des linken oder des rechten Tandem-Hauptzylinders über das Primärkammerselbstentlüftungsloch des jeweils anderen, des rechten oder des linken, Tandem-Hauptzylinders bewirkt.

14. Doppelhauptzylinderanordnung (51) nach einem vorhergehenden Anspruch, wobei die linke (34) und die rechte Primärkammer wenigstens teilweise durch einen linken (21) bzw. einen rechten Primärkammerkolben (21) definiert sind und die linke und die rechte Sekundärkammer wenigstens teilweise durch einen linken (27) bzw. einen rechten Sekundärkammerkolben definiert sind, wobei der linke oder der rechte Primärkolben im Fall eines Fluiddruckverlusts in der linken oder der rechten Primärkammer auf den entsprechenden linken bzw. rechten Sekundärkolben wirkt.

15. Doppelhauptzylinderanordnung (51) nach Anspruch 14, bei der der Hub des Sekundärkolbens (27) durch einen Anschlag begrenzt ist und der Hubweg des Primärkolbens (21) im Fall eines Druckverlusts in der Sekundärkammer (32) einen Reservehubweg enthält, der den Gesamthub des Sekundärkolbens berücksichtigt.

## Revendications

1. Ensemble de maître cylindre double (51) présentant un maître cylindre tandem gauche (58) ayant une chambre primaire gauche (34) contenue à l'intérieur d'un corps et une chambre secondaire gauche (32) contenue à l'intérieur du corps, et un maître cylindre tandem droit ayant une chambre primaire droite contenue à l'intérieur du corps et une chambre secondaire droite contenue à l'intérieur du corps, le maître cylindre tandem gauche (58) pouvant fonctionner indépendamment du maître cylindre tandem droit, dans lequel une partie au moins de la chambre primaire gauche entoure une partie de la chambre secondaire gauche et/ou une partie au moins de la chambre primaire droite entoure une partie de la chambre secondaire droite.

2. Ensemble de maître cylindre double (51) selon la revendication 1, dans lequel le corps est un seul corps unitaire (1).

3. Ensemble de maître cylindre double (51) selon la revendication 1 ou 2, dans lequel le corps est un corps coulé.

4. Ensemble de maître cylindre double (51) selon l'une quelconque des revendications précédentes, dans lequel la chambre secondaire gauche (32) et la chambre secondaire droite sont toutes deux en communication de fluide avec un seul orifice de sortie de chambre secondaire (36) formé dans le corps.

5. Ensemble de maître cylindre double (51) selon l'une quelconque des revendications précédentes, dans lequel la chambre secondaire gauche (32) est en communication de fluide permanente avec la chambre secondaire droite.

6. Ensemble de maître cylindre double (51) selon l'une quelconque des revendications précédentes, dans lequel le maître cylindre tandem gauche (58) présente une zone de chambre de réservoir gauche (40) et le maître cylindre tandem droit présente une zone de chambre de réservoir droite, dans lequel les zones de chambres de réservoirs gauche et droite sont en communication de fluide permanente avec un seul orifice de réservoir (64) formé dans le corps.

7. Ensemble de maître cylindre double (51) selon l'une quelconque des revendications précédentes, dans lequel la chambre secondaire gauche (32) et la chambre secondaire droite sont toutes deux en communication de fluide permanente avec une seule soupape unidirectionnelle (50) qui empêche le fluide de s'écouler en provenance des chambres secondaires au cours de l'actionnement des freins, et qui permet au fluide de s'écouler vers les chambres secondaires au cours du desserrage des freins.

8. Ensemble de maître cylindre double (51) selon l'une quelconque des revendications précédentes, comprenant un ensemble de soupape d'équilibrage (80) présentant une soupape d'équilibrage unidirectionnelle gauche (81) située dans un passage de soupape d'équilibrage gauche (86) qui est en communication de fluide avec la chambre primaire gauche, et une soupape d'équilibrage unidirectionnelle droite (81') située dans un passage de soupape d'équilibrage droit (86') qui est en communication de fluide avec la chambre primaire droite, dans lequel les passages de soupape d'équilibrage gauche et droit sont tous deux formés dans le corps.

9. Ensemble de maître cylindre double (51) selon l'une quelconque des revendications précédentes, comprenant un surpresseur gauche (56) fonctionnel pour appliquer une force sur le maître cylindre tandem gauche, et un surpresseur droit fonctionnel pour appliquer une force sur le maître cylindre tandem droit, dans lequel les surpresseurs gauche et droit sont tous deux contenus dans ledit corps (1).

10. Ensemble de maître cylindre double (51) selon la revendication 9, comprenant un seul orifice d'entrée (62) destiné à fournir le liquide sous pression aux surpresseurs gauche et droit, dans lequel le seul orifice d'entrée est formé dans le corps.

11. Ensemble de maître cylindre double (51) selon la revendication 10, dans lequel le seul orifice d'entrée (62) est en communication de fluide avec le surpresseur gauche par l'intermédiaire d'un passage d'orifice d'entrée gauche (2), et est en communication de fluide avec le surpresseur droit par l'intermédiaire d'un passage d'orifice d'entrée droit (2'), dans lequel les passages d'orifice d'entrée gauche et droit sont formés par perçage.

12. Ensemble de maître cylindre double (51) selon l'une quelconque des revendications précédentes, dans lequel chaque chambre secondaire présente un trou d'auto-purge de chambre secondaire (33) qui est ouvert lorsque l'ensemble de maître cylindre double se trouve dans une position de repos, l'actionnement de l'un desdits maîtres cylindres tandems gauche ou droit seul provoquant la purge du fluide hydraulique dans la chambre secondaire dudit un desdits maîtres cylindres tandems gauche ou droit par l'intermédiaire du trou d'auto-purge de chambre secondaire de l'autre dudit un desdits maîtres cylindres tandems gauche ou droit.

13. Ensemble de maître cylindre double (51) selon la revendication 12, dans lequel chaque chambre primaire présente un trou d'auto-purge de chambre primaire (23), chacun d'eux étant formé de préférence dans le corps, de préférence par perçage, qui est ouvert lorsque le maître cylindre double se trouve dans une position de repos, l'actionnement de l'un desdits maîtres cylindres tandems gauche ou droit seul provoquant la purge du fluide hydraulique dans la chambre secondaire dudit un desdits maîtres cylindres tandems gauche ou droit par l'intermédiaire du trou d'auto-purge de chambre primaire de l'autre dudit un desdits maîtres cylindres tandems gauche ou droit.

14. Ensemble de maître cylindre double (51) selon l'une quelconque des revendications précédentes, dans lequel les chambres primaires gauche (34) et droite sont définies au moins en partie par des pistons de chambres primaires gauche (21) et droite respectifs (21), et les chambres secondaires gauche et droite sont définies au moins en partie par des pistons de chambres secondaires gauche (27) et droite respectifs, dans lequel le piston primaire gauche ou droit agit sur le piston secondaire gauche ou droit correspondant dans le cas d'une perte de pression de fluide dans la chambre primaire gauche ou droite.

15. Ensemble de maître cylindre double (51) selon la revendication 14, dans lequel la course du piston secondaire (27) est limitée par un arrêt et, dans le cas d'une perte de pression dans la chambre secondaire (32), le déplacement du piston primaire (21) comprend un déplacement de réserve qui suit la course totale du piston secondaire.
